# FASCICULE DE BREVET EUROPEEN

(11) **EP 3 248 305 B1**
(45) Date de publication et mention de la délivrance du brevet: **05.12.2018**
(21) Numéro de dépôt: 16703345.5
(22) Date de dépôt: 19.01.2016
(51) Int. Cl.: H04B 10/40, H04Q 11/00

(54) **COMMUTATEUR ÉTHERNET POUR RÉSEAU EN FIBRE OPTIQUE**
ETHERNET-SWITCH FÜR FASEROPTISCHES NETZWERK
ETHERNET SWITCH FOR FIBEROPTIC NETWORK

(30) Priorité: 19.01.2015 FR 1550404
(43) Date de publication de la demande: 29.11.2017
(73) Titulaire: Ifotec, 38500 Voiron (FR)
(72) Inventeur: BILLET, Gilles, 38500 Voiron (FR); SILLANS, Christian, 38260 La Frette (FR); MASSELOT, Michaël, 38480 Saint Jean d'Avelane (FR)
(74) Mandataire: Talbot, Alexandre
(86) Numéro de dépôt international: PCT/FR2016/050093
(87) Numéro de publication internationale: WO 2016/116690

(56) Documents cités:
- US-A1- 2012 045 202
- US-A1- 2012 288 279
- US-B2- 7 447 437

## Description

### Domaine de l'invention

L'invention est relative à un commutateur Ethernet pour réseau en fibre optique.

### Etat de la technique

Aujourd'hui, le transit de l'information se fait majoritairement sous la forme d'un signal lumineux qui se déplace le long d'une fibre optique. La fibre optique permet de faire transiter une quantité très importante d'information avec une faible atténuation.

Cependant, de manière conventionnelle, un ordinateur ou un autre équipement de communication de délivre pas un signal lumineux apte à transiter directement dans une fibre optique. Un ordinateur délivre un signal électrique qui transite par l'intermédiaire de fils de cuivre.

La transformation de ce signal électrique en un signal optique se fait communément par un commutateur. Dans un environnement Ethernet, l'information lumineuse provenant d'une fibre optique est reçue par un commutateur Ethernet qui va transmettre l'information à plusieurs dispositifs, par exemple des ordinateurs. Le commutateur Ethernet est mutualisé. De la même manière, plusieurs commutateurs Ethernet sont connectés à une même fibre optique afin de faire transiter le maximum d'information disponible.

Lorsque le signal lumineux se déplace de son émetteur vers son destinataire, il transite par l'intermédiaire d'une multitude de commutateurs Ethernet. Cette organisation est très pratique mais elle est également très consommatrice d'énergie électrique ce qui limite son intérêt.

Le document US2012/045202 traite d'un récepteur bi-directionnel à faible énergie et son procédé d'utilisation. Le circuit comporte un ou plusieurs circuits de commande de l'économie d'énergie qui vont réduire la consommation maximale lors des phases de silence de l'émetteur-récepteur et qui sont capables de faire basculer des parties de l'émetteur-récepteur entre des modes de fonctionnement standard et des modes d'économie d'énergie. Un tel mode de réalisation ne permet que des économies d'énergies ponctuelles sur des périodes de temps très courtes. Le document US7,447,437 traite d'une interface pour le transfert de données opto-électroniques. Le circuit possède un mode sommeil lorsqu'aucune activité n'est détectée. Un signal de réveil est présent lors de la détection de lumière pour restaurer les fonctionnalités.

### Objet de l'invention

L'invention a pour objet un commutateur convertisseur de média qui présente une consommation électrique plus faible que les dispositifs de l'art antérieur.

On tend à atteindre ce résultat au moyen d'un commutateur comportant :
- un premier émetteur de lumière destiné à transmettre un signal lumineux dans la fibre optique,
- un premier photodétecteur configuré pour transformer un signal lumineux en provenance de la fibre optique en un signal électrique,
- au moins un port de communication de signaux électriques avec un terminal,
- un circuit d'alimentation configuré pour alimenter l'émetteur de lumière et le premier photodétecteur.

Le commutateur est remarquable en ce qu'il comporte un circuit de réveil connecté au premier photodétecteur et au port de communication configuré pour générer un signal de réveil électrique à la réception d'un signal lumineux par le premier photodétecteur et/ou d'un signal électrique sur le port de communication, le circuit de réveil étant connecté au circuit d'alimentation pour amorcer l'alimentation du premier émetteur de lumière et du port de communication.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente, de manière schématique, un réseau fibre optique comportant trois commutateurs montés en série,
- la figure 2 représente, de manière schématique, un commutateur relié à deux fibres optique et à quatre lignes de communication électrique,
- la figure 3 représente, de manière schématique, un mode de réalisation particulier un circuit de réveil,
- la figure 4 représente, de manière schématique, un autre mode de réalisation particulier un circuit de réveil
- la figure 5 représente, de manière schématique, un troisième mode de réalisation particulier un circuit de réveil.

### Description détaillée

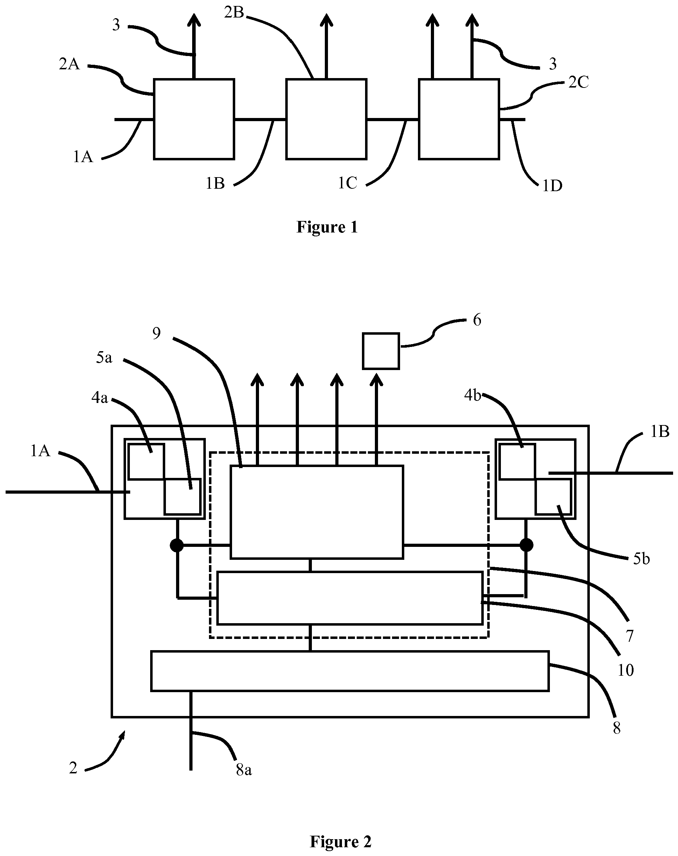

La figure 1 montre un réseau de fibres optiques 1A, 1B, 1C et 1D qui comporte plusieurs commutateurs Ethernet 2A, 2B et 2C montés en série.

Lors de son transit dans le réseau de fibres optiques, un signal lumineux arrive au premier commutateur Ethernet 2A depuis la fibre optique 1A puis il traverse le premier commutateur Ethernet 2A qui réémet le signal lumineux dans la fibre optique 1B suivante à destination du deuxième commutateur Ethernet 2B. Dans cette configuration, on constate que les commutateurs 2 doivent être constamment sous tension afin de détecter le signal optique qui arrive pour le traiter et/ou le réémettre. Le signal lumineux arrive par exemple au commutateur 2B où il est transformé en un signal électrique à destination d'un terminal par l'intermédiaire d'un port 3 de communication de signaux électrique.

De manière avantageuse, le port 3 est configuré pour autoriser le transit de connexions Ethernet. Le port 3 est par exemple un connecteur RJ45 également appelé 8P8C.

On constate que pour assurer un transit optimal des différentes informations à l'intérieur du réseau, une approche simple consiste à alimenter en continu toutes les fonctionnalités du commutateur 2.

Comme illustré à la figure 2, le commutateur 2 peut être décomposé en plusieurs fonctionnalités.

De manière classique, le commutateur comporte un premier photodétecteur 4a qui est configuré pour détecter le signal lumineux en provenance de la première fibre optique 1A. Le premier photodétecteur 4a va transformer le signal lumineux en un signal électrique.

Le commutateur 2 comporte également un premier émetteur de lumière 5a qui est configuré pour émettre un signal lumineux dans la première fibre optique 1A. Le premier émetteur de lumière 5a va transformer le signal électrique en un signal lumineux.

Le premier photodétecteur 4a et le premier émetteur de lumière 5a sont connectés à un circuit de commande 6 qui est configuré pour traiter les signaux reçus par le premier photodétecteur 4a et définir les signaux à émettre par le premier émetteur de lumière 5a.

Le commutateur 2 comporte également un ou plusieurs ports 3 de communication par signaux électriques qui peuvent être matérialisés par des prises au standard RJ45. A titre d'exemple, le commutateur 2 est connecté à au moins un terminal 6 qui peut être un ordinateur et/ou une caméra par l'intermédiaire d'un ou plusieurs ports 3 de communication.

L'information fournie et/ou reçue par les ports 3 de communication est traitée par le circuit de commande 7. Les images saisies par la caméra sont par exemple réémises via la fibre optique pour l'utilisateur final qui peut en retour renvoyer une information déclenchant par exemple un déplacement de la caméra.

Le commutateur 2 comporte encore un circuit d'alimentation 8 qui comporte une source d'alimentation et/ou une borne d'alimentation 8a destinée à être connectée à une source d'alimentation. La source d'alimentation 8 va fournir l'énergie électrique au premier photodétecteur 4a, au premier émetteur de lumière 5a ainsi qu'au circuit de commande 7.

Dans le mode de réalisation illustré, le commutateur comporte encore un deuxième photodétecteur 4b et un deuxième émetteur de lumière 5b destinés à être associé à une deuxième fibre optique 1B. Dans cette configuration, un signal lumineux peut être reçu de la première fibre optique 1A et réémis sur la deuxième fibre optique 1B et/ou inversement.

Le circuit de commande 7 comporte un circuit de traitement 9 configuré pour traiter des signaux électriques en provenances des ports 3 et des photodétecteurs 4 et pour générer les signaux électriques qui seront envoyés sur les ports 3 ainsi que sur les émetteurs de lumière 5. Le circuit de traitement 9 est alimenté par le circuit d'alimentation 8.

Une manière de limiter la consommation du commutateur Ethernet 2 est de prévoir un mode de veille dans lequel certaines fonctions du commutateur sont désactivées.

Quand le commutateur 2 est en veille, aucun signal ne doit être envoyé que ce soit sous forme électrique ou optique. Il est donc particulièrement avantageux de ne pas alimenter les émetteurs de lumière 5. Il est également possible de ne pas alimenter le circuit configuré pour émettre les signaux électriques. En revanche, les circuits et éléments intervenant dans la réception des signaux sont alimentés afin de détecter un signal rentrant. Le circuit de traitement 9 peut ne pas être alimenté ou alors alimenté en partie.

Dans un mode de réalisation particulier, il est avantageux de prévoir un circuit de réveil 10 qui va analyser les signaux optique et électrique pour engager une phase de réveil.

Pour quitter le mode de veille, un signal lumineux de réveil est émis sur la première fibre optique à destination du premier commutateur Ethernet 2. Le signal lumineux de réveil est reçu par le premier photodétecteur 4a qui va émettre un signal électrique de réveil au circuit de commande. A réception de ce signal de réveil, le circuit de commande 7 et plus particulièrement le circuit de réveil 10 va commander le circuit d'alimentation 8 pour alimenter de nouveau l'émetteur de lumière 5a et/ou 5b et le circuit de traitement 9.

De manière avantageuse, la nouvelle alimentation de l'émetteur de lumière 5b va entrainer l'émission d'un signal de réveil sur la deuxième fibre optique 1B à destination du deuxième commutateur ce qui entraine le réveil du deuxième commutateur 2B.

Dans un mode de réalisation avantageux, le signal de réveil comporte une information sur le destinataire de l'information à transmettre de sorte que le circuit de commande 7 peut déterminer si l'information en attente lui est destinée ou non. Cette information sur le destinataire évite de renvoyer un signal de réveil au commutateur 2 suivant alors que l'information ne lui est pas destinée.

Ce mode de réalisation est particulièrement avantageux lorsque le commutateur 2 comporte plus de deux connexions à des fibres optiques ce qui évite de transmettre un signal de réveil dans une fibre optique de manière inutile.

Dans cette configuration, les commutateurs se réveillent en cascade.

De manière analogue, le circuit de commande 7 peut également être configuré pour engager le mode de veille lorsque les photodétecteurs 4 ne détectent pas de signal lumineux durant une période prédéterminée. De manière préférentielle, le mode de veille peut être engagé si aucun signal entrant n'est reçu depuis plus d'un microseconde, de préférence plus de 3 microsecondes, avantageusement plus de 5 microsecondes. Ainsi, après la réception d'un signal lumineux sur le premier photodétecteur 4a, le circuit de commande 7 réalise le décompte de la période prédéterminée. Si à la fin du décompte, aucun signal n'a été transmis au circuit de commande 7 ce dernier peut engager le mode de veille. Cette fonctionnalité peut être intégrée dans un circuit de veille qui peut être mis en oeuvre avec le circuit de réveil 10 ou dans le circuit d'alimentation 8.

Dans cette configuration, les commutateurs 2 engagent le mode de veille en cascade.

Lorsqu'un terminal 6 veut échanger des données avec un autre terminal 6 par l'intermédiaire du réseau, il doit transmettre ses informations sur les différentes fibres optiques 1. Cet accès au réseau va engager le réveil des commutateurs Ethernet 2.

De manière avantageuse, le signal de réveil est initié par le terminal 6 au moyen d'une connexion électrique. La connexion électrique relie le terminal 6 au commutateur Ethernet 2 et plus particulièrement avec le port 3. Dans un mode de réalisation avantageux, le signal de réveil émis par le terminal 6 vient commander un interrupteur par exemple un relais ou un transistor qui vient lui même activer l'émetteur de lumière 5 ou simuler la réception d'un signal optique par un photodétecteur 4. De manière avantageuse, le port 3 est connecté au circuit de réveil 10 de sorte que la réception d'un signal électrique sur le port 3 déclenche la phase de réveil telle que décrite précédemment.

Il est également avantageux de prévoir que lorsque le terminal 6 a terminé sa communication, il informe le commutateur 2. Si le commutateur 2 ne reçoit pas d'autres signaux lumineux, il peut couper l'alimentation des émetteurs de lumière 5. L'émetteur de lumière 5 étant désactivé, plus aucun signal ne transite et les commutateurs 2 vont se mettre en veille en cascade. La mise en veille du commutateur 2 est réalisée si tous les récepteurs de signaux indiquent qu'aucun signal n'est en cours de réception.

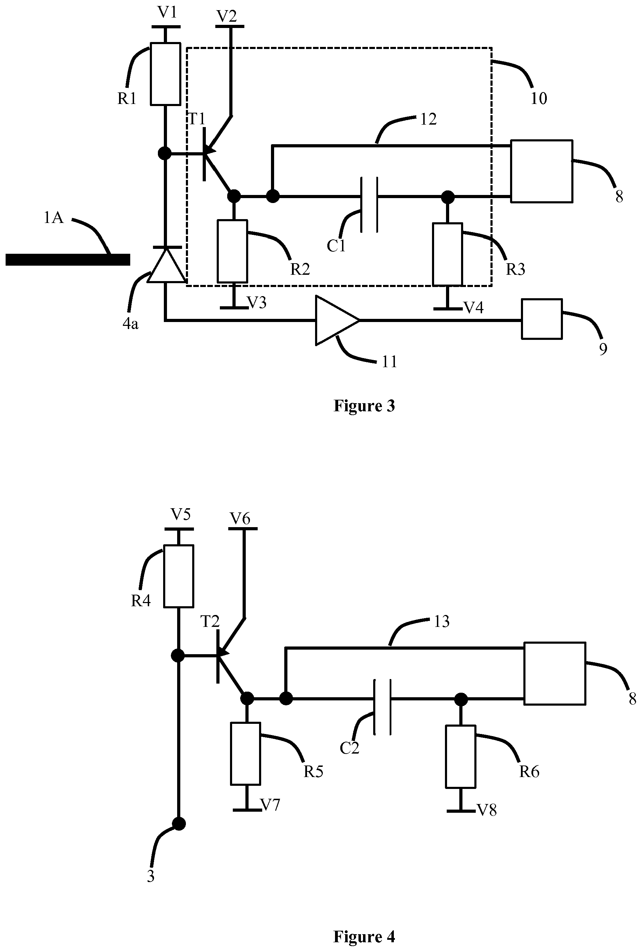

La figure 3 illustre un mode de réalisation particulier de détection du signal optique de réveil par le circuit de réveil 10.

Le photodétecteur 4 est polarisé de manière à transformer un signal lumineux en un courant représentatif. Dans le mode de réalisation illustré, le photodétecteur 4 est une photodiode.

Une première borne du photodétecteur 4 est connectée à une première source de potentiel qui applique un premier potentiel V1.

Une deuxième borne du photodétecteur 4 est connectée au circuit de commande 7 qui va traiter les signaux électriques reçus et plus particulièrement au circuit de traitement 9. De manière avantageuse, un amplificateur de transimpédance 11 est disposé entre le photodétecteur 4 et le circuit de traitement 9 de manière à mettre en forme le signal issu du photodétecteur 4 et polariser le photodétecteur 4. L'amplificateur transimpédance est configuré pour appliquer une tension V_{REF}. L'amplificateur transforme le signal en courant délivré par le photodétecteur en un signal en tension qui sera traité par le circuit de traitement 9 de manière logique. Il est avantageux d'utiliser une résistance en contre-réaction de l'amplificateur et former ainsi un dispositif de type amplificateur transimpédance résistif.

Le commutateur 2 comporte un circuit de réveil 10 qui est configuré pour détecter un signal électrique émis par le photodétecteur 4 en réponse à un signal lumineux reçu. Le circuit de réveil 10 est connecté entre le photodétecteur et la source de potentiel V1 pour récupérer un signal électrique représentatif des signaux optiques reçus. Le circuit de réveil 10 est relié à la première borne du photodétecteur 4.

Le circuit de réveil 10 va transmettre une information qui va initier le réveil du commutateur 2. Cette information est avantageusement transmise directement au circuit d'alimentation 8.

Il est avantageux de prévoir un premier transistor T1 ayant une électrode de commande reliée au photodétecteur 4 de sorte que le courant émis par le photodétecteur 4 fasse évoluer le courant délivré par le transistor T1. Le signal en sortie du transistor T1 évolue donc en fonction du signal lumineux reçu. Dans un mode de réalisation particulier, le transistor atteint la saturation dès la réception d'un signal par le photodétecteur de sorte que le signal en sortie du transistor est de type logique c'est-à-dire avec la délivrance d'un 1 ou d'un 0. Le signal lumineux reçu est transformé en un signal logique en sortie du transistor T1.

Un premier condensateur C1 est connecté entre la sortie du premier transistor T1 et le circuit d'alimentation 8 en association avec une première résistance R4 de manière à ce que le courant délivré par le transistor T1 génère une impulsion de courant formant un signal de réveil pour le circuit d'alimentation 8. Ainsi avec la réception d'un premier signal lumineux par le photodétecteur 4, le courant émis par le transistor T1 est transformé en une impulsion de courant qui va former le signal de réveil au circuit d'alimentation 8.

Dans un mode de réalisation plus précis, le circuit de réveil 10 comporte un transistor T1 polarisé entre des deuxième et troisième sources de potentiel qui appliquent respectivement les potentiels V2 et V3. La première borne du transistor T1 est reliée à la deuxième source de potentiel V2 et la deuxième borne du transistor T1 est reliée à la troisième source de potentiel V3.

L'électrode de commande du transistor T1 est connectée au photodétecteur 4 de sorte que le courant traversant le transistor T1 évolue en fonction du courant émis par le photodétecteur 4.

Une deuxième résistance R2 est disposée entre la troisième source de potentiel V3 et la deuxième borne du transistor T1. La deuxième borne du transistor T1 est reliée à une troisième résistance R3 par l'intermédiaire d'un premier condensateur C1. Une première borne du premier condensateur C1 est reliée au photodétecteur 4 et une deuxième borne du premier condensateur C1 est reliée à la troisième résistance R3.

La troisième résistance R3 est connectée à la quatrième source de potentiel V4.

La deuxième borne du condensateur C1 et la borne de la résistance R3 sont reliées au circuit d'alimentation 8 pour lui fournir l'ordre de réveil électrique.

De manière avantageuse, une connexion 12 est réalisée entre la deuxième borne du photodétecteur 4 ou la première borne du condensateur C1 et le circuit d'alimentation 8. Cette connexion permet d'envoyer un signal électrique représentatif du signal lumineux reçu au circuit d'alimentation 10.

La première borne du photodétecteur 4 est connectée à la source de potentiel V1, avantageusement par l'intermédiaire d'une résistance R1. L'électrode de commande du transistor T1 est connectée entre la source de potentiel V1 et l'autre borne du photodétecteur 4.

Dans cette configuration, le signal détecté par le photodétecteur 4 se traduit par l'émission d'un courant représentatif du signal émis. Le courant émis par le photodétecteur 4 passe au travers de la première résistance R1 et il vient modifier l'intensité du courant délivré par le transistor T1.

Le courant délivré par le transistor T1 à l'ensemble formé par le condensateur C1 et la résistance R3 va générer une impulsion qui va être détectée par le circuit d'alimentation 8 comme le signal de réveil du commutateur 2.

De manière avantageuse, le transistor T1 est un transistor bipolaire dont l'électrode de base est reliée au photodétecteur 4. Il est également avantageux de prévoir que le transistor bipolaire T1 va se trouver dans un état de saturation lorsque du courant traverse le photodétecteur. De cette manière l'électrode de collecteur va se rapprocher de la valeur du troisième potentiel. Le rapport R1/R2 et le gain en courant du transistor T1 permettent de fixer un seuil de puissance optique détectée au delà duquel le transistor T1 est saturé. Lorsqu'une puissance optique est reçue avec une amplitude supérieure à la valeur seuil, le courant émis par le photodétecteur atteint également un seuil ce qui va saturer le transistor T1, une impulsion est envoyée par le condensateur C1 et la ligne 12 passe à l'état haut. La ligne 12 reste à l'état haut tant que la puissance optique reçue est au dessus de la valeur seuil. Ce montage permet de former un signal logique à partir du signal lumineux reçu. Ce signal électrique est différent du signal envoyé au circuit 9.

En variante, un transistor T1 à effet de champ est utilisable.

Il est particulièrement avantageux d'avoir la première et la deuxième sources de potentiel configurées pour délivrer le même potentiel, par exemple le potentiel Vcc (V1=V2=Vcc). Dans ce cas de figure, la résistance R1 agit comme une résistance de rappel au potentiel de la première source V1 ce qui permet d'annuler au moins en partie les courants de fuite du transistor T1.

Il est particulièrement avantageux d'avoir la troisième et la quatrième sources de potentiel configurées pour délivrer le même potentiel, par exemple la masse (V3=V4=0).

Dans le mode de réalisation illustré, la deuxième borne du transistor T1 est directement connectée au circuit d'alimentation 8 par la ligne 12. Lorsqu'un émetteur de lumière est alimenté, il génère de la puissance optique, cette puissance est lue par le photodétecteur 4. Il en résulte que le photodétecteur 4 émet un courant représentatif de l'activation de la fibre optique 1 ce qui se traduit par l'émission du signal correspondant sur la ligne 12. La ligne 12 indique au circuit de réveil ainsi qu'au circuit de mise en veille que la fibre optique est activée. Lorsque la fibre n'est plus activée, le signal émis par la ligne 12 pour le circuit 8 change. Le circuit de mise en veille peut initier une mise en veille du commutateur ou plus particulièrement de la partie du commutateur qui est associée à la fibre optique désactivée.

Cette configuration est particulièrement avantageuse pour la gestion de l'alimentation dans le commutateur 2 lorsque le circuit de commande est configuré pour couper l'alimentation si il n'y a plus de signal optique reçu. Dans le cas de figure illustré, le circuit de réveil fait également office de circuit de mise en veille. En variante, il est possible de connecter la ligne 12 au circuit de mise en veille.

Dans un mode de réalisation, le condensateur C1 et la résistance R3 ne sont pas utilisés. Le photodétecteur 4 détecte l'activation de la fibre optique et le signal de réveil est émis par le transistor T1 qui atteint sa saturation. De cette manière, l'activation de la fibre optique entraine l'activation de la ligne 12 et le réveil du commutateur. La désactivation de la fibre optique entraine la désactivation de la ligne 12 et éventuellement la mise en veille du commutateur. En d'autres termes, tant que des signaux sont reçus par le photodétecteur 4, le photodétecteur 4 envoie un courant et le transistor T1 fait de même. Le circuit d'alimentation 8 reçoit alors un signal représentatif de l'activité du photodétecteur 4. A l'arrêt des signaux optiques, le photodétecteur 4 n'émet plus de courant et cette absence de signal électrique est reçue par le circuit d'alimentation 8 qui peut mettre en veille le commutateur.

Cependant, de manière à mieux détecter l'activation de la fibre optique, il est particulièrement avantageux d'utiliser la résistance R3 et le condensateur C1. Ces deux éléments vont mettre en forme le signal émis par le transistor T1 lors du changement d'état pour former une impulsion de courant qui est plus facilement détectable par le circuit de réveil. Dans ce cas de figure, il est toujours avantageux d'utiliser la désactivation de la ligne 12 pour initier une mise en veille du commutateur ou d'une partie du commutateur.

En choisissant judicieusement les valeurs des première et deuxième résistances R1 et R2, il est possible de fixer le seuil de détection du photodétecteur 4. A titre d'exemple, il est possible d'utiliser une résistance R1 ayant une valeur de 220KOhms et une résistance R2 ayant une valeur de 100KOhms de manière à fixer que le courant entrainant la saturation du transistor T1 est obtenue pour une seuil de détection du photodétecteur de l'ordre de -24dBm (4µWatt). Dans ce cas de figure, avec un émetteur de lumière qui peut émettre une puissance optique de 0dBm à 1310nm et avec un photodétecteur ayant une sensibilité de -24dBm, il est possible de transmettre des signaux sur fibre monomodale G652 sur des distances jusqu'à 70km.

Une fois le mode de veille engagé, la consommation du photodétecteur 4 est égale à son courant d'obscurité qui est très faible. Il est également particulièrement avantageux de couper l'alimentation du circuit de traitement 9 pour diminuer la consommation du commutateur 2 tout en assurant la réception et le traitement des signaux électriques entrant.

Dans une variante de réalisation illustrée à la figure 4, le circuit de réveil 10 comporte une connexion à un des ports 3 de communication par des signaux électriques.

Le circuit de réveil 10 comporte une première entrée de réception d'un signal de réveil formé par exemple par le port 3. Cette première entrée est connectée à une cinquième source de potentiel V5 par l'intermédiaire d'une quatrième résistance R4.

Un deuxième transistor T2 est polarisé entre une sixième source de potentiel V6 et une septième source de potentiel V7. L'électrode de commande du deuxième transistor T2 est reliée à la première entrée. La première borne du transistor T2 est reliée à la sixième source de potentiel V6. La deuxième borne du transistor est reliée à la septième source de potentiel V7 par l'intermédiaire d'une cinquième résistance R5.

La deuxième borne du transistor T2 est reliée à une sixième résistance R6 par l'intermédiaire d'un deuxième condensateur C2. Une première borne du condensateur C2 est reliée à la deuxième borne du transistor T2. La deuxième borne du condensateur C2 est reliée à la sixième résistance R6 et au circuit d'alimentation. Le fonctionnement du transistor T2 est avantageusement identique à celui du transistor T1 afin de fournir en sortie un signal logique de type 1 ou 0.

La sixième résistance R6 est connectée à une huitième source de potentiel V8.

De manière avantageuse, la deuxième borne du transistor T2 est reliée directement au circuit d'alimentation 8 par la ligne 13.

Lors de la transmission d'une information par le terminal 6, la première borne d'entrée est placée à un potentiel prédéfini différent du potentiel V5, par exemple la masse. Un courant circule alors à travers la quatrième résistance R4. Comme les conditions appliquées sur la borne de commande du deuxième transistor T2 évoluent, un courant est généré sur la deuxième borne du transistor T2.

Ce courant généré par le transistor T2 vient charger le deuxième condensateur C2 qui en association avec la sixième résistance R6 va créer une impulsion qui est détectée par le circuit d'alimentation 8 comme un signal de réveil du commutateur. L'impulsion représente le signal électrique de réveil qui indique au circuit d'alimentation 8 que le terminal 6 veut transmettre des informations via la fibre optique. Une fois le signal détecté, le circuit d'alimentation 8 engage le réveil du commutateur 2.

Le transistor T2 est avantageusement un transistor bipolaire dont l'électrode de base est reliée à la première borne d'entrée. Il est également avantageux de prévoir que le courant transitant par la quatrième résistance R4 va entrainer la saturation du transistor T2 de sorte que le potentiel présent sur l'électrode de collecteur va se rapprocher du cinquième potentiel. En variante, il est également possible d'utiliser un transistor à effet de champ.

Si les potentiels V5 et V6 sont identiques, la résistance R4 va agir comme une résistance de rappel vers le potentiel V5 et va annuler au moins en partie les courants de fuite du transistor T2.

En modulant les valeurs des résistances R4 et R5, il est possible de moduler la valeur du seuil de détection du courant entrainant la génération du signal impulsionnel de réveil.

L'utilisation d'une connexion 13 directe entre le deuxième transistor T2 et le circuit d'alimentation 8 est particulièrement avantageuse lorsque le circuit d'alimentation 8 est configuré pour gérer l'alimentation des différentes fonctionnalités du commutateur en fonction des signaux envoyés par le terminal 6. Le mode de fonctionnement de la ligne 13 est identique à ce qui a été décrit pour la ligne 12. Il en est de même pour le circuit RC formé par le condensateur C2 et la résistance R6 qui aussi avantageux que le circuit RC formé par le condensateur C1 et la résistance R3

Tant que le terminal 6 envoie des données au commutateur 2, la première borne d'entrée se trouve en moyenne au potentiel prédéfini et le transistor T2 envoie un courant. La connexion directe entre le transistor T2 et le circuit d'alimentation 8 est à l'état haut représentatif d'un transfert de données à partir de l'utilisateur. La valeur moyenne est calculée sur une base de temps de quelques millisecondes, par exemple 1 milliseconde, avantageusement entre 2 et 5 millisecondes.

Quand le flux de données s'arrête, le transistor T2 n'émet plus de courant et la connexion directe entre le transistor T2 et le circuit de commande passe à l'état bas. Le circuit d'alimentation 8 détecte le changement d'état et peut initier la mise en veille du commutateur 2.

Le circuit d'alimentation 8 est avantageusement configuré pour ne pas alimenter le port 3 de communication électrique ni le premier émetteur de lumière lorsque les première et deuxième connexions directes 12, 13 sont à l'état bas.

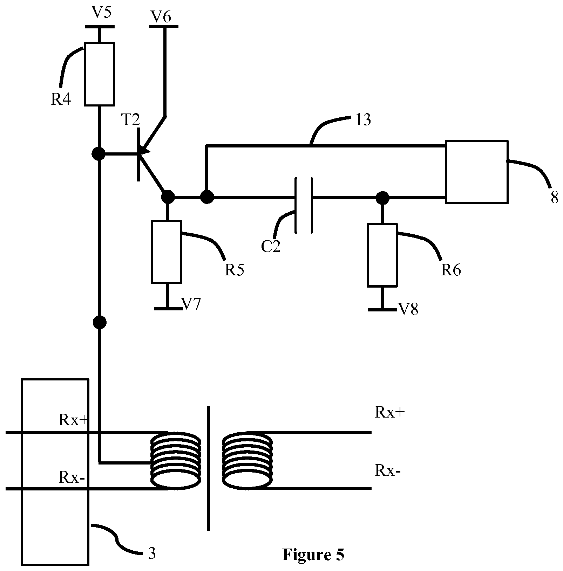

Dans un mode de réalisation particulier illustré à la figure 5, la première borne d'entrée est connectée à une bobine qui relie les lignes de transit des signaux reçues représentées par Rx+ et Rx-. Ainsi, tant que des données sont transmises par le terminal, la première borne d'entrée est au potentiel prédéfini. Quand la transmission de données s'arrête, le potentiel de la première borne d'entrée change et le circuit de commande est en mesure de détecter l'arrêt de la transmission de données. Ce mode de réalisation est particulièrement avantageux pour faire transiter le signal de réveil via le mode commun des paires de communication de câbles matérialisés par Rx+ et Rx-. L'avantage de faire transiter le signal de réveil par les lignes métalliques recevant les signaux Rx+ et Rx- est de localiser la détection d'activité sur les ports optiques qui émettre de la puissance optique dès lors qu'ils sont actifs.

Dans ce cas de figure, il n'est pas nécessaire d'utiliser un canal de communication supplémentaire pour le transit d'un signal de réveil dédié.

Dans un mode de réalisation avantageux, il est avantageux d'utiliser le mode commun des paires de communication des câbles RJ45 entre le terminal et le commutateur pour faire transiter un signal de réveil spécifique.

Dans ce cas de figure, le signal de réveil est introduit dans les paires de communication Tx+ et Tx- et il transite jusqu'au terminal où il est dissocié, par exemple selon le mode de réalisation précédent, dans les paires de communication Rx+ et Rx-.

Dans ces cas de figure, il est avantageux de prévoir que l'électrode de commande du deuxième transistor T2 est reliée à un dispositif configuré pour extraire le mode commun des lignes des communication Rx+ et Rx- utilisées pour la transmission de signaux depuis le terminal 6 vers le commutateur 2.

## Revendications

1. Commutateur Ethernet (2) pour réseau par fibre optique (1) comportant:
- un premier émetteur de lumière (5a) destiné à transmettre un signal lumineux dans la fibre optique (1),
- un premier photodétecteur (4a) configuré pour transformer un signal lumineux en provenance de la fibre optique (1) en un signal électrique,
- au moins un port (3) de communication de signaux électriques avec un terminal (6),
- un circuit d'alimentation (8) configuré pour alimenter le premier émetteur de lumière (5a) et le premier photodétecteur (4a),
- un circuit de réveil (10) connecté au premier photodétecteur (4a) et au port (3) de communication configuré pour générer un signal de réveil électrique à la réception d'un signal lumineux par le premier photodétecteur (4a) et/ou d'un signal électrique sur le port (3) de communication, le circuit de réveil (10) étant connecté au circuit d'alimentation (8) pour amorcer l'alimentation du premier émetteur de lumière (5a) et du port (3) de communication
et **caractérisé en ce que** le circuit de réveil (10) comporte :
- un premier transistor (T1) ayant une électrode de commande reliée au premier photodétecteur (4a) de sorte que le courant émis par le premier photodétecteur (4a) fait évoluer le courant délivré par le premier transistor (T1),
un premier condensateur (C1) connecté entre la sortie du premier transistor (T1) et le circuit d'alimentation (8) en association avec une première résistance (R4) de manière à ce que le courant délivré par le premier transistor (T1) génère une impulsion de courant formant un signal de réveil pour le circuit d'alimentation (8).

2. Commutateur Ethernet selon la revendication 1, **caractérisé en ce qu'**il comporte un circuit de traitement (9) alimenté par le circuit d'alimentation (8) et configuré pour traiter des signaux électriques en provenances des ports (3) de communication et des photodétecteurs (4) et pour générer les signaux électriques qui seront envoyés sur les ports (3) ainsi que sur les émetteurs de lumière (5) et **en ce que** le circuit de réveil (10) est connecté au circuit d'alimentation (8) pour amorcer l'alimentation du circuit de traitement (9).

3. Commutateur Ethernet selon l'une des revendications 1 et 2, **caractérisé en ce que** le circuit de réveil (10) comporte une première connexion (12) directe entre la sortie du premier transistor (T1) et le circuit d'alimentation (8).

4. Commutateur Ethernet selon l'une des revendications 1 et 2, **caractérisé en ce que** le circuit de réveil (10) comporte :
- un deuxième transistor (T2) ayant une électrode de commande reliée à un port (3) de communication électrique de sorte que le potentiel présent sur le port (3) de communication fait évoluer l'intensité du courant délivré par le deuxième transistor (T2),
- un deuxième condensateur connecté entre la sortie du deuxième transistor (T2) et le circuit d'alimentation (8) en association avec une deuxième résistance (R6) de manière à ce que le courant délivré par le deuxième transistor (T2) génère une impulsion de courant formant un signal de réveil pour le circuit d'alimentation (8).

5. Commutateur Ethernet selon l'une des revendications 1, 2 et 4, **caractérisé en ce que** le circuit de réveil (10) comporte une deuxième connexion (13) directe entre la sortie du deuxième transistor (T2) et le circuit d'alimentation (8).

6. Commutateur Ethernet selon les revendications 3 et 5, **caractérisé en ce que** le circuit d'alimentation (8) est configuré pour ne pas alimenter le port (3) de communication électrique ni le premier émetteur de lumière (5a) lorsque les première et deuxième connexions directes (12, 13) sont à l'état bas.

7. Commutateur Ethernet selon la revendication 4, **caractérisé en ce que** l'électrode de commande du deuxième transistor (T2) est reliée à un dispositif configuré pour extraire le mode commun des lignes des communication (Rx+, Rx-) utilisées pour la transmission de signaux depuis le terminal (6) vers le commutateur (2).

## Patentansprüche

1. Ethernet-Switch (2) für Glasfasernetze (1), der umfasst:
- einen ersten Lichtemitter (5a), der zum Übertragen eines Lichtsignals in der Glasfaser (1) vorgesehen ist,
- einen ersten Fotodetektor (4a), der so vorgesehen ist, dass er ein von der Glasfaser (1) kommendes Lichtsignal in ein elektrisches Signal umwandelt,
- mindestens einen Port (3) zur Kommunikation elektrischer Signale mit einem Endgerät (6),
- eine Versorgungsschaltung (8), die so vorgesehen ist, dass sie den ersten Lichtemitter (5a) und den ersten Fotodetektor (4a) versorgt,
- eine Aufweckschaltung (10), die an den ersten Fotodetektor (4a) und an den Kommunikationsport (3) gelegt und so vorgesehen ist, dass sie beim Empfang eines Lichtsignals durch den ersten Fotodetektor (4a) und/oder eines elektrischen Signals am Kommunikationsport (3) ein elektrisches Aufwecksignal erzeugt, wobei die Aufweckschaltung (10) an die Versorgungsschaltung (8) gelegt ist, um die Versorgung des ersten Lichtsenders (5a) und des Kommunikationsports (3) auszulösen,
und **dadurch gekennzeichnet, dass** die Aufweckschaltung (10) umfasst:
- einen ersten Transistor (T1) mit einer Steuerelektrode, die an den ersten Fotodetektor (4a) gelegt ist, sodass der vom ersten Fotodetektor (4a) abgegebene Strom dafür sorgt, dass sich der vom ersten Transistor (T1) abgegebene Strom fortbewegt,
- einen ersten Kondensator (C1), der zwischen den Ausgang des ersten Transistors (T1) und die Versorgungsschaltung (8) in Verbindung mit einem ersten Widerstand (R4) so gelegt ist, dass der vom ersten Transistor (T1) gelieferte Strom einen Stromimpuls erzeugt, der ein Aufwecksignal für die Versorgungsschaltung (8) bildet.

2. Ethernet-Switch (1) nach Anspruch 1, **dadurch gekennzeichnet, dass** er eine Verarbeitungsschaltung (9) umfasst, die von der Versorgungsschaltung (8) versorgt wird und so vorgesehen ist, dass sie elektrische Signale verarbeitet, die von den Kommunikationsports (3) und den Fotodetektoren (4) kommen, und um elektrische Signale zu erzeugen, die an die Ports (3) und die Lichtemitter (5) geschickt werden, sowie dadurch, dass die Aufweckschaltung (10) mit der Versorgungsschaltung (8) verbunden ist, um die Versorgung der Verarbeitungsschaltung (9) auszulösen.

3. Ethernet-Switch nach einem der Ansprüche 1 und 2, **dadurch gekennzeichnet, dass** die Aufweckschaltung (10) eine erste Direktverbindung (12) zwischen dem Ausgang des ersten Transistors (T1) und der Versorgungsschaltung (8) umfasst.

4. Ethernet-Switch nach einem der Ansprüche 1 und 2, **dadurch gekennzeichnet, dass** die Aufweckschaltung (10) umfasst:
- einen zweiten Transistor (T2) mit einer Steuerelektrode, die an einen Kommunikationsport (3) zur elektrischen Kommunikation gelegt ist, in der Weise, dass das am Kommunikationsport (3) anliegende Potenzial dafür sorgt, dass sich die von dem zweiten Transistor (T2) gelieferte Stromstärke bewegt,
- einen ersten Kondensator, der zwischen dem Ausgang des zweiten Transistors (T2) und der Versorgungsschaltung (8) in Verbindung mit einem zweiten Widerstand (R6) so geschaltet ist, dass der vom zweiten Transistor (T2) gelieferte Strom einen Stromimpuls erzeugt, der ein Aufwecksignal für die Versorgungsschaltung (8) bildet.

5. Ethernet-Switch nach einem der Ansprüche 1, 2 und 4, **dadurch gekennzeichnet, dass** die Aufweckschaltung (10) eine zweite Direktverbindung (13) zwischen dem Ausgang des zweiten Transistors (T2) und der Versorgungsschaltung (8) umfasst.

6. Ethernet-Schalter nach den Ansprüchen 3 und 5, **dadurch gekennzeichnet, dass** die Versorgungsschaltung (8) so vorgesehen ist, dass sie weder den elektrischen Kommunikationsport (3) noch den ersten Lichtemitter (5a) versorgt, wenn die erste und zweite Direktverbindung (12, 13) auf LOW stehen.

7. Ethernet-Switch nach Anspruch 4, **dadurch gekennzeichnet, dass** die Steuerelektrode des zweiten Transistors (T2) an eine Vorrichtung gelegt ist, die so vorgesehen ist, dass sie den gemeinsamen Modus der Kommunikationsleitungen (Rx+, Rx-) herauszieht, die zur Übertragung von Signalen von dem Endgerät (6) zum Switch (2) verwendet werden.

## Claims

1. Ethernet switch (2) for an optic fiber network (1) comprising:
- a first light emitter (5a) designed to transmit a light signal in the optic fiber (1),
- a first photodetector (4a) configured to transform a light signal coming from the optic fiber (1) into an electric signal,
- at least one communication port (3) of electric signals with a terminal (6),
- a power supply circuit (8) configured to supply power to the light emitter (5a) and to the first photodetector (4a),
- a wake-up circuit (10) connected to the first photodetector (4a) and to the communication port (3) configured to generate an electric wake-up signal on receipt of a light signal by the first photodetector (4a) and/or of an electric signal on the communication port (3), the wake-up circuit (10) being connected to the power supply circuit (8) to trigger power supply of the first light emitter (5a) and of the communication port (3)
**characterized in that** the wake-up circuit (10) comprises.
- a first transistor (T1) having a control electrode connected to the photodetector (4) so that the current transmitted by the photodetector (4) makes the current delivered by the transistor (T1) change,
- a first capacitor (C1) connected between the output of the first transistor (T1) and the power supply circuit (8) in association with a first resistor (R4) so that the current delivered by the first transistor (T1) generates a current pulse forming a wake-up signal for the power supply circuit (8).

2. Ethernet switch according to claim 1, **characterized in that** it comprises a processing circuit (9) supplied by the power supply circuit (8) and configured to process electric signals coming from the communication ports (3) and from the photodetectors (4) and to generate the electric signals which will be sent to the ports (3) and to the light emitters (5), and **in that** the wake-up circuit (10) is connected to the power supply circuit (8) to trigger power supply of the processing circuit (9).

3. Ethernet switch according to one of claims 1 and 2, **characterized in that** the wake-up circuit (10) comprises a first direct connection (12) between the output of the first transistor (T1) and the power supply circuit (8).

4. Ethernet switch according to one of claims 1 and 2, **characterized in that** the wake-up circuit (10) comprises:
- a second transistor (T2) having a control electrode connected to an electric communication port (3) so that the voltage present on the communication port (3) makes the current intensity delivered by the second transistor (T2) change,
- a second capacitor connected between the output of the second transistor (T2) and the power supply circuit (8) in association with a second resistor (R6) so that the current delivered by the second transistor (T2) generates a current pulse forming a wake-up signal for the power supply circuit (8).

5. Ethernet switch according to one of claims 1, 2 and 4, **characterized in that** the wake-up circuit (10) comprises a second direct connection (13) between the output of the second transistor (T2) and the power supply circuit (8).

6. Ethernet switch according to claims 3 and 5, **characterized in that** the power supply circuit (8) is configured so as not to supply the electric communication port (3) and the first light emitter when the first and second direct connections (12, 13) are in low state.

7. Ethernet switch according to claim 4, **characterized in that** the control electrode of the second transistor (T2) is connected to a device configured to extract the common mode of the communication lines (Rx+, Rx-) used for transmission of signals from the terminal (6) to the switch (2).
